# EUROPÄISCHE PATENTSCHRIFT

(11) **EP 2 296 925 B1**
(45) Veröffentlichungstag und Bekanntmachung des Hinweises auf die Patenterteilung: **21.12.2011**
(21) Anmeldenummer: 09780703.6
(22) Anmeldetag: 16.07.2009
(51) Int. Cl.: B60K 6/38, F16D 25/063

(54) **HYBRIDANTRIEBSSTRANG FÜR EIN KRAFTFAHRZEUG**
HYBRID DRIVE TRAIN FOR A MOTOR VEHICLE
CHAÎNE DE PROPULSION HYBRIDE POUR UN VÉHICULE AUTOMOBILE

(30) Priorität: 17.07.2008 DE 102008040497
(43) Veröffentlichungstag der Anmeldung: 23.03.2011
(73) Patentinhaber: ZF Friedrichshafen AG, 88038 Friedrichshafen (DE)
(72) Erfinder: BORNTRAEGER, Kai, 88085 Langenargen (DE); BACHMANN, Max, 88339 Bad Waldsee (DE); HUNOLD, Bernard, 88046 Friedrichshafen (DE); BUDACH, Rene, 88212 Ravensburg (DE)
(86) Internationale Anmeldenummer: PCT/EP2009/059145
(87) Internationale Veröffentlichungsnummer: WO 2010/007125

(56) Entgegenhaltungen:
- EP-A- 1 736 345
- DE-C1- 10 160 466
- US-A1- 2007 007 059

## Beschreibung

Die vorliegende Erfindung bezieht sich einen Hybridantriebsstrang für ein Kraftfahrzeug gemäß dem Oberbegriff des Patentanspruchs 1.

Aus dem Stand der Technik sind Hybridantriebsstränge für Kraftfahrzeuge bekannt, welche einen Verbrennungsmotor und eine einen Rotor und einen Stator aufweisende Elektromaschine aufweisen. Ferner weisen die bekannten Hybridantriebsstränge ein üblicherweise als Automatgetriebe ausgeführtes Getriebe auf, wobei der Verbrennungsmotor mit der Eingangswelle des Getriebes über eine Kupplung lösbar verbindbar ist und der Rotor der Elektromaschine mit der Eingangswelle des Getriebes verbunden ist.

Beispielsweise beschreibt die DE 103 46640 A1 der Anmelderin einen Antriebsstrang für ein Hybridfahrzeug, bei dem ein Verbrennungsmotor antriebstechnisch mit einer Trennkupplung verbunden ist, deren Ausgangsseite mit einer Getriebeeingangswelle in Verbindung steht, welche mit einem Eingangselement eines Automatgetriebes verbunden ist. Bei dem bekannten Antriebsstrang ist die Getriebeeingangswelle auch mittels einer Elektromaschine antreibbar, wobei zu diesem Zweck der Rotor der Elektromaschine mit der Getriebeeingangswelle verbunden ist.

Aus der DE 10012221 A1 geht ein Hybridantriebsstrang hervor, bei dem ein Verbrennungsmotor antriebstechnisch mit einer Trennkupplung verbunden ist, deren Ausgangsseite mit einer Getriebeeingangswelle in Verbindung steht, welche mit einem Eingangselement eines Automatgetriebes verbunden ist, wobei der Rotor einer Elektromaschine über eine Getriebeeingangsstufe mit hoher Übersetzung mit der Getriebeeingangswelle verbunden ist; dadurch wird der Vorteil erzielt, dass die Elektromaschine kleiner dimensioniert werden kann, da das Drehzahlniveau der Elektromaschine vom Drehzahlniveau des Verbrennungsmotors abgekoppelt ist und durch die Übersetzung ausreichend Moment für einen reinen Elektroantrieb zur Verfügung steht.

Besonders vorteilhaft ist es, wenn die zwischen dem Verbrennungsmotor und der Getriebeeingangswelle angeordnete Trennkupplung als Lamellenkupplung ausgeführt ist, bei der der Außenlamellenträger drehfest mit dem Planetenträger eines als Eingangsgetriebestufe dienenden Planetengetriebes und der Innenlamellenträger mit dem Verbrennungsmotor verbunden ist, wobei der Rotor der Elektromaschine das Hohlrad des Planetengetriebes antreibt und das Sonnenrad des Planetengetriebes an ein Gehäuse gekoppelt ist.

In derartigen Getrieben übernimmt die Einheit umfassend die Elektromaschine, die Trennkupplung und die Eingangsgetriebestufe auch die Funktionalität eines hydrodynamischen Wandlers.

Die EP-A-1 736 345 beschreibt einen Hybridantriebsstrang nach dem Oberbegriff des Anspruchs 1.

Der vorliegenden Erfindung liegt daher die Aufgabe zugrunde, einen Hybridantriebsstrang für ein Kraftfahrzeug anzugeben, umfassend einen Verbrennungsmotor, eine Elektromaschine mit einem Stator und einem Rotor und ein Getriebe, bei dem in Kraftflussrichtung zwischen dem Verbrennungsmotor und der Getriebeeingangswelle eine als Lamellenkupplung ausgeführte Trennkupplung angeordnet ist, deren Außenlamellenträger drehfest mit einem Element einer Eingangsgetriebestufe und deren Innenlamellenträger mit dem Verbrennungsmotor verbunden ist, wobei der Rotor der Elektromaschine ein weiteres Element der Eingangsgetriebestufe antreibt, bei dem eine kompakte Lagerung und Zentrierung der Lamellenträger der Trennkupplung erzielbar ist.

Des weiteren sollen die Axialtoleranzen innerhalb der Einheit umfassend die Elektromaschine, die Trennkupplung und die Eingangsgetriebestufe ausgeglichen werden und eine Axialkraft an der Getriebeeingangswelle, die bei herkömmlichen Antriebssträngen durch den hydrodynamischen Wandler aufgebracht wird, erzeugt werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Hybridantriebsstrang für ein Kraftfahrzeug vorgeschlagen, umfassend einen Verbrennungsmotor, eine Elektromaschine mit einem Stator und einem Rotor und ein Getriebe, bei dem in Kraftflussrichtung zwischen dem Verbrennungsmotor und der Getriebeeingangswelle eine als Lamellenkupplung ausgeführte Trennkupplung angeordnet ist, deren Außenlamellenträger drehfest mit einem Element einer Eingangsgetriebestufe und deren Innenlamellenträger mit dem Verbrennungsmotor verbunden ist, wobei der Rotor der Elektromaschine ein weiteres Element der Eingangsgetriebestufe antreibt, bei dem die Lagerung und Zentrierung der Lamellenträger der Trennkupplung mittels zwei vorzugsweise als Nadellager ausgeführte Wälzlager erfolgt, welche die Antriebswelle des Verbrennungsmotors mit dem Innenlamellenträger und den Planetenträger mit dem Außenlamellenträger zueinander zentrieren und in axiale Flucht bringen.

Vorzugsweise ist die Eingangsgetriebestufe als einfaches Planetengetriebe ausgeführt, wobei der Außenlamellenträger mit dem Planetenträger des Planetengetriebes verbunden ist und der Rotor der Elektromaschine das Hohlrad des Planetengetriebes antreibt; das Sonnenrad des Planetengetriebes ist an ein Gehäuse gekoppelt.

Gemäß der Erfindung erfolgt ein Ausgleich der Axialtoleranzen innerhalb der Einheit umfassend die Elektromaschine, die Trennkupplung und die Eingangsgetriebestufe durch Verschieben bzw. Ausrichten des Lamellenpakets in der Mitnahmeverzahnung des Innenlamellenträgers. Gemäß einer Weiterbildung der Erfindung ist der Innenlamellenträger gehäusefest in einer Abdeckung gelagert, wobei der Außenlamellenträger über eine Einstellscheibe an der Getriebeeingangswelle axial befestigt wird.

Gemäß einer besonders vorteilhaften Ausführungsform der Erfindung ist an einem Axiallager der Getriebeeingangswelle eine Axialfeder vorgesehen, welche die Getriebeeingangswelle gegenüber dem Gehäuse vorspannt. Vorzugsweise ist die Axialfeder als Tellerfeder ausgeführt. Hierbei ist das Vorspannmaß der Axialfeder durch eine Einstellscheibe, die vorzugsweise zwischen der Kupplungsnabe und der Getriebeeingangswelle angeordnet ist, einstellbar. Es kann aber auch ein langes Federpaket als Axialfeder verwendet werden.

Vorteilhafterweise ist die Einstellscheibe zwischen dem Außenlamellenträger der Trennkupplung und der Getriebeeingangswelle angeordnet.

Alternativ dazu kann die Axialfeder zum Vorspannen der Getriebeeingangswelle gegenüber dem Gehäuse zwischen der Mitnahmeverbindung der Kupplungsnabe und der Getriebeeingangswelle angeordnet sein.

Die Erfindung wird im folgenden anhand der beigefügten Figuren beispielhaft näher erläutert. Es zeigen:
- Figur 1:: Eine Schnittansicht des für die Erfindung relevanten Teils eines Antriebsstrangs; und
- Figur 2:: Eine weitere schematische Schnittansicht für die Erfindung relevanten Teils eines Antriebsstrangs zur Veranschaulichung einer zweiten Ausführungsform der Erfindung.

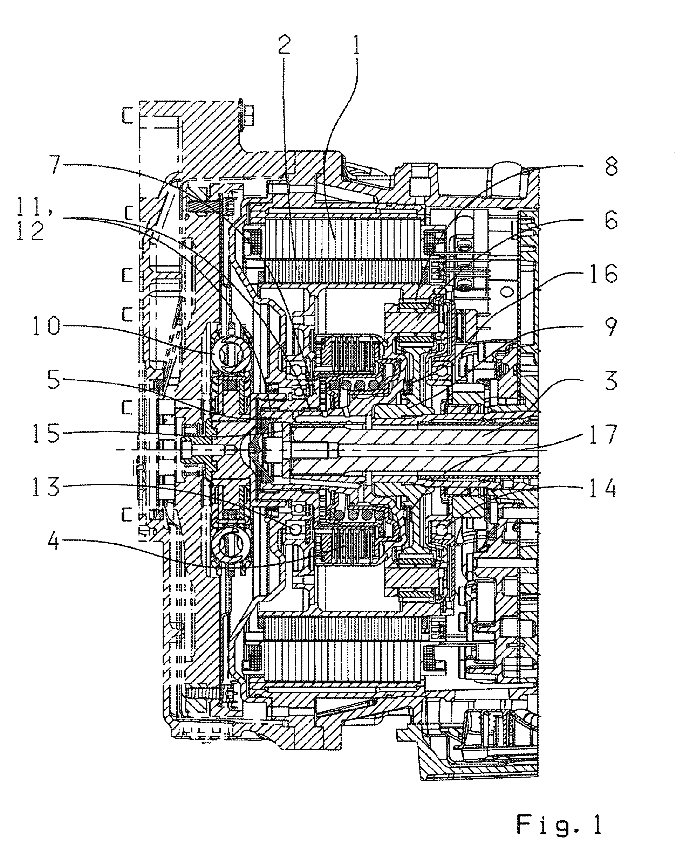

In Figur 1 ist ein Teil eines Hybridantriebsstrangs dargestellt. Er umfasst einen nicht dargestellten Verbrennungsmotor, eine vorzugsweise als Innenläufer ausgeführte Elektromaschine mit einem Stator 1 und einem Rotor 2, wobei zwischen dem Verbrennungsmotor und der Getriebeeingangswelle 3 eine als Lamellenkupplung ausgeführte Trennkupplung 4 angeordnet ist, deren Außenlamellenträger 5 drehfest mit dem Planetenträger 6 eines als Eingangsgetriebestufe dienenden Planetengetriebes und deren Innenlamellenträger 7 mit der Antriebswelle des Verbrennungsmotors verbunden ist.

Wie aus Figur 1 ersichtlich, ist der Rotor 2 der Elektromaschine mit dem Hohlrad 8 des Planetengetriebes verbunden, wobei das Sonnenrad 9 des Planetengetriebes an ein Gehäuse gekoppelt ist.

Bei dem gezeigten Beispiel ist zwischen dem Verbrennungsmotor und der Eingangsgetriebestufe ein Drehschwingungsdämpfer 10 angeordnet. Gemäß der Erfindung erfolgt die Lagerung und Zentrierung der Lamellenträger 5, 7 der Trennkupplung 4 mittels zwei vorzugsweise als Nadellager 11, 12 ausgeführte Wälzlager, die den Innenlamellenträger 7 und den Außenlamellenträger 5 zueinander zentrieren und in axiale Flucht bringen. Die Nadellager 11, 12 sind auf einem außenzylindrischen Abschnitt des Außenlamellenträgers 5 angeordnet.

Wie aus Figur 1 ersichtlich, sind vorzugsweise als Rillenkugellager ausgeführte Wälzlager 13, 14 vorgesehen, wobei im Rahmen einer weiteren Variante der Erfindung das Lager 14 entfallen kann.

Ein Ausgleich der Axialtoleranzen innerhalb der Einheit umfassend die Elektromaschine, die Trennkupplung 4 und die Eingangsgetriebestufe erfolgt erfindungsgemäß in vorteilhafter Weise durch Verschieben bzw. Ausrichten des Lamellenpakets der Trennkupplung 4 in der Mitnahmeverzahnung des Innenlamellenträgers 7. Dies wird dadurch ermöglicht, dass die Lamellen des Innen- und Außenlamellenträgers zueinander axial verschiebbar sind.

Gemäß einer Weiterbildung der Erfindung ist der Innenlamellenträger 7 gehäusefest in einer Abdeckung gelagert; der Außenlamellenträger 5 ist erfindungsgemäß über eine Einstellscheibe 15 an der Getriebeeingangswelle 3 axial befestigt.

Erfindungsgemäß ist an einem Axiallager 16 der Getriebeeingangswelle 3 zwischen dem Sonnerad 9 der Eingangsgetriebestufe und dem Außenlamellenträger 5 eine Axialfeder 17 vorgesehen, über die die Getriebeeingangswelle 3 gegenüber dem Gehäuse vorgespannt wird, wobei die Axialfeder 17 als Tellerfeder ausgeführt ist, deren Vorspannmaß durch eine Einstellscheibe, die vorzugsweise zwischen der Kupplungsnabe der Trennkupplung 4 und der Getriebeeingangswelle 3 angeordnet ist, einstellbar ist.

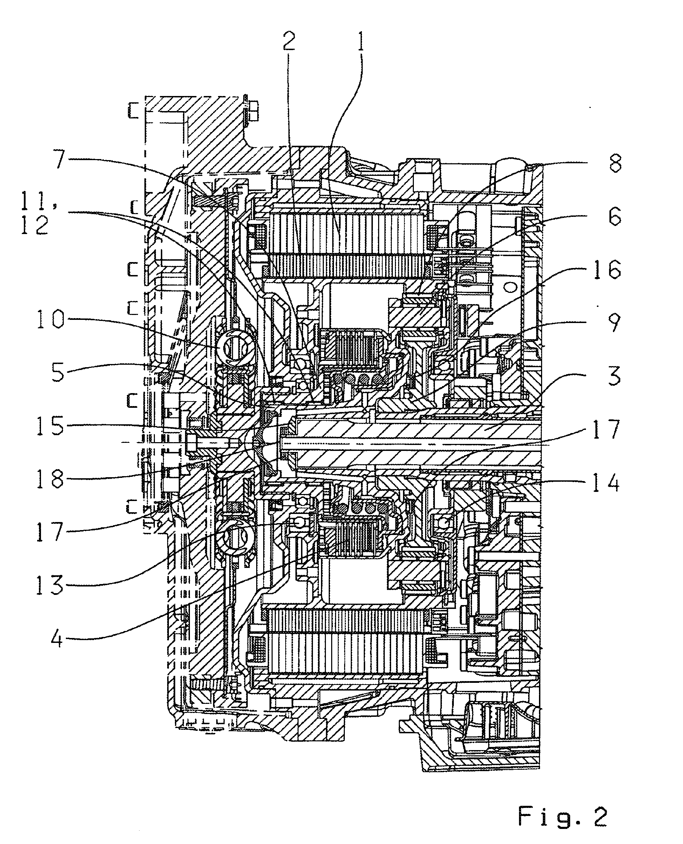

Gemäß einer weiteren Ausführungsform der Erfindung ist die Axialfeder 17 zum Vorspannen der Getriebeeingangswelle 3 gegenüber dem Gehäuse zwischen der Mitnahmeverbindung 18 der Kupplungsnabe der Trennkupplung 4 und der Getriebeeingangswelle 3 angeordnet, wie anhand Figur 2 veranschaulicht.

### Bezugszeichen

- 1: Stator
- 2: Rotor
- 3: Getriebeeingangswelle
- 4: Trennkupplung
- 5: Außenlamellenträger
- 6: Planetenträger
- 7: Innenlamellenträger
- 8: Hohlrad
- 9: Sonnenrad
- 10: Drehschwingungsdämpfer
- 11: Nadellager
- 12: Nadellager
- 13: Rillenkugellager
- 14: Rillenkugellager
- 15: Einstellscheibe
- 16: Axiallager
- 17: Axialfeder
- 18: Mitnahmeverbindung der Kupplungsnabe

## Patentansprüche

1. Hybridantriebsstrang für ein Kraftfahrzeug, umfassend einen Verbrennungsmotor, eine Elektromaschine mit einem Stator (1) und einem Rotor (2) und ein Getriebe, bei dem in Kraftflussrichtung zwischen dem Verbrennungsmotor und der Getriebeeingangswelle (3) eine als Lamellenkupplung ausgeführte Trennkupplung (4) angeordnet ist, deren Außenlamellenträger (5) drehfest mit einem Element einer Eingangsgetriebestufe und deren Innenlamellenträger (7) mit dem Verbrennungsmotor verbunden ist, wobei der Rotor (2) der Elektromaschine ein weiteres Element der Eingangsgetriebestufe antreibt, **dadurch gekennzeichnet, dass** die Lagerung und Zentrierung der Lamellenträger (5, 7) der Trennkupplung (4) mittels zwei Wälzlager (11, 12) erfolgt, die den Innenlamellenträger (7) und den Außenlamellenträger (5) zueinander zentrieren und in axiale Flucht bringen und dass ein Ausgleich der Axialtoleranzen innerhalb der Einheit umfassend die Elektromaschine, die Trennkupplung (4) und die Eingangsgetriebestufe durch Verschieben bzw. Ausrichten des Lamellenpakets der Trennkupplung (4) in der Mitnahmeverzahnung des Innenlamellenträgers (7) erfolgt.

2. Hybridantriebsstrang für ein Kraftfahrzeug, nach Anspruch 1, **dadurch gekennzeichnet, dass** die Wälzlager (11, 12) als Nadellager ausgeführt sind.

3. Hybridantriebsstrang für ein Kraftfahrzeug, nach Anspruch 1 oder 2, **dadurch gekennzeichnet, dass** die Eingangsgetriebestufe als Planetengetriebe ausgeführt ist, wobei der Außenlamellenträger (5) mit dem Planetenträger (6) des Planetengetriebes verbunden ist, wobei der Rotor (2) der Elektromaschine das Hohlrad (8) des Planetengetriebes antreibt und das Sonnenrad (9) des Planetengetriebes an ein Gehäuse gekoppelt ist.

4. Hybridantriebsstrang für ein Kraftfahrzeug, nach einem der vorangehenden Ansprüche, **dadurch gekennzeichnet, dass** der Innenlamellenträger (7) der Trennkupplung (4) gehäusefest in einer Abdeckung gelagert ist.

5. Hybridantriebsstrang für ein Kraftfahrzeug, nach einem der vorangehenden Ansprüche, **dadurch gekennzeichnet, dass** eine Axialfeder (17) vorgesehen ist, über die die Getriebeeingangswelle (3) gegenüber dem Gehäuse vorgespannt wird.

6. Hybridantriebsstrang für ein Kraftfahrzeug, nach Anspruch 5, **dadurch gekennzeichnet, dass** die Axialfeder (17) an einem Axiallager (16) der Getriebeeingangswelle (3) angeordnet ist.

7. Hybridantriebsstrang für ein Kraftfahrzeug, nach Anspruch 5, **dadurch gekennzeichnet, dass** die Axialfeder (17) zwischen der Mitnahmeverbindung (18) der Kupplungsnabe der Trennkupplung (4) und der Getriebeeingangswelle (3) angeordnet ist.

8. Hybridantriebsstrang für ein Kraftfahrzeug, nach einem der Ansprüche 1 bis 6, **dadurch gekennzeichnet, dass** der Außenlamellenträger (5) der Trennkupplung (4) über eine Einstellscheibe (15) an der Getriebeeingangswelle (3) axial befestigt ist.

9. Hybridantriebsstrang für ein Kraftfahrzeug, nach einem der Ansprüche 6 bis 8, **dadurch gekennzeichnet, dass** die Axialfeder (17) als Tellerfeder ausgebildet ist.

10. Hybridantriebsstrang für ein Kraftfahrzeug, nach einem der Ansprüche 6 bis 9, **dadurch gekennzeichnet, dass** das Vorspannmaß der Axialfeder (17) durch eine Einstellscheibe einstellbar ist.

11. Hybridantriebsstrang für ein Kraftfahrzeug, nach Anspruch 10, **dadurch gekennzeichnet, dass** die Einstellscheibe zwischen der Kupplungsnabe der Trennkupplung (4) und der Getriebeeingangswelle (3) angeordnet ist.

12. Hybridantriebsstrang für ein Kraftfahrzeug, nach einem der Ansprüche 6 bis 9, **dadurch gekennzeichnet, dass** die Axialfeder (17) als langes Federpaket ausgebildet ist.

## Claims

1. Hybrid drive train for a motor vehicle, comprising an internal combustion engine, an electric machine with a stator (1) and a rotor (2), and a transmission in which a clutch (4), which is embodied as a multi-disc clutch, is arranged in the direction of force flux between the internal combustion engine and the transmission input shaft (3), the external multi-disc carrier (5) of which clutch (4) is connected in a rotationally fixed fashion to an element of an input transmission stage, and the internal multi-disc carrier (7) of which clutch (4) is connected to the internal combustion engine, wherein the rotor (2) of the electric machine drives a further element of the input transmission stage, **characterized in that** the bearing and centring of the multi-disc carriers (5, 7) of the clutch (4) occurs by means of two roller bearings (11, 12) which centre the internal multi-disc carrier (7) and the external multi-disc carrier (5) with respect to one another and place them in axial alignment, and **in that** the axial tolerances within the unit comprising the electric machine, the clutch (4) and the input transmission stage are compensated by displacing or orienting the multi-disc packet of the clutch (4) in the driving toothing arrangement of the internal multi-disc carrier (7).

2. Hybrid drive train for a motor vehicle, according to Claim 1, **characterized in that** the roller bearings (11, 12) are embodied as needle bearings.

3. Hybrid drive train for a motor vehicle, according to Claim 1 or 2, **characterized in that** the input transmission stage is embodied as a planetary gear mechanism, wherein the external multi-disc carrier (5) is connected to the planet carrier (6) of the planetary gear mechanism, wherein the rotor (2) of the electric machine drives the ring gear (8) of the planetary gear mechanism, and the sun gear (9) of the planetary gear mechanism is coupled to a housing.

4. Hybrid drive train for a motor vehicle, according to one of the preceding claims, **characterized in that** the internal multi-disc carrier (7) of the clutch (4) is mounted fixed to the housing in a cover.

5. Hybrid drive train for a motor vehicle, according to one of the preceding claims, **characterized in that** an axial spring (17) is provided, by means of which the transmission input shaft (3) is prestressed with respect to the housing.

6. Hybrid drive train for a motor vehicle, according to Claim 5, **characterized in that** the axial spring (17) is arranged on an axial bearing (16) of the transmission input shaft (3).

7. Hybrid drive train for a motor vehicle, according to Claim 5, **characterized in that** the axial spring (17) is arranged between the driving connection (18) of the clutch hub of the clutch (4) and the transmission input shaft (3).

8. Hybrid drive train for a motor vehicle, according to one of Claims 1 to 6, **characterized in that** the external multi-disc carrier (5) of the clutch (4) is attached axially to the transmission input shaft (3) by means of an adjustment disc (15).

9. Hybrid drive train for a motor vehicle, according to one of Claims 6 to 8, **characterized in that** the axial spring (17) is embodied as a disc spring.

10. Hybrid drive train for a motor vehicle, according to one of Claims 6 to 9, **characterized in that** the degree of prestressing of the axial spring (17) can be adjusted by means of an adjustment disc.

11. Hybrid drive train for a motor vehicle, according to Claim 10, **characterized in that** the adjustment disc is arranged between the clutch hub of the clutch (4) and the transmission input shaft (3).

12. Hybrid drive train for a motor vehicle, according to one of Claims 6 to 9, **characterized in that** the axial spring (17) is embodied as a long spring packet.

## Revendications

1. Chaîne cinématique hybride pour un véhicule automobile, comprenant un moteur à combustion interne, une machine électrique avec un stator (1) et un rotor (2), et une transmission, dans laquelle, dans le sens du flux de forces entre le moteur à combustion interne et l'arbre d'entrée de la transmission (3), est disposé un embrayage séparateur (4) réalisé sous forme d'embrayage à disques, dont le support de disques extérieur (5) est connecté de manière solidaire en rotation à un élément d'un étage de transmission d'entrée et dont le support de disques intérieur (7) est connecté au moteur à combustion interne, le rotor (2) de la machine électrique entraînant un élément supplémentaire de l'étage de transmission d'entrée,
**caractérisée en ce que** le support sur palier et le centrage des supports de disques (5, 7) de l'embrayage séparateur (4) a lieu au moyen de deux paliers à roulement (11, 12), qui centrent le support de disques intérieur (7) et le support de disques extérieur (5) l'un par rapport à l'autre et les alignent axialement, et **en ce qu'**une compensation des tolérances axiales à l'intérieur de l'unité constituée du moteur électrique, de l'embrayage séparateur (4) et de l'étage de transmission d'entrée a lieu par coulissement ou orientation du paquet de disques de l'embrayage séparateur (4) dans la denture d'entraînement du support de disques intérieur (7).

2. Chaîne cinématique hybride pour un véhicule automobile selon la revendication 1, **caractérisée en ce que** les paliers à roulement (11, 12) sont réalisés sous forme de paliers à aiguilles.

3. Chaîne cinématique hybride pour un véhicule automobile selon la revendication 1 ou 2, **caractérisée en ce que** l'étage de transmission d'entrée est réalisé sous forme d'engrenage planétaire, le support de disques extérieur (5) étant connecté au porte-satellites (6) de l'engrenage planétaire, le rotor (2) de la machine électrique entraînant la couronne (8) de l'engrenage planétaire et la roue solaire (9) de l'engrenage planétaire étant accouplée à un boîtier.

4. Chaîne cinématique hybride pour un véhicule automobile selon l'une quelconque des revendications précédentes, **caractérisée en ce que** le support de disques intérieur (7) de l'embrayage séparateur (4) est monté de manière fixée au boîtier dans un recouvrement.

5. Chaîne cinématique hybride pour un véhicule automobile selon l'une quelconque des revendications précédentes, **caractérisée en ce qu'**un ressort axial (17) est prévu, par le biais duquel l'arbre d'entrée de transmission (3) est précontraint par rapport au boîtier.

6. Chaîne cinématique hybride pour un véhicule automobile selon la revendication 5, **caractérisée en ce que** le ressort axial (17) est disposé sur un palier axial (16) de l'arbre d'entrée de transmission (3).

7. Chaîne cinématique hybride pour un véhicule automobile selon la revendication 5, **caractérisée en ce que** le ressort axial (17) est disposé entre la connexion d'entraînement (18) du moyeu d'entraînement de l'embrayage séparateur (4) et l'arbre d'entrée de transmission (3).

8. Chaîne cinématique hybride pour un véhicule automobile selon l'une quelconque des revendications précédentes, **caractérisée en ce que** le support de disques extérieur (5) de l'embrayage séparateur (4) est fixé axialement par le biais d'une rondelle d'ajustement (15) sur l'arbre d'entrée de transmission (3).

9. Chaîne cinématique hybride pour un véhicule automobile selon l'une quelconque des revendications 6 à 8, **caractérisée en ce que** le ressort axial (17) est réalisé sous forme de ressort Belleville.

10. Chaîne cinématique hybride pour un véhicule automobile selon l'une quelconque des revendications précédentes, **caractérisée en ce que** l'ampleur de la précontrainte du ressort axial (17) peut être ajustée par une rondelle d'ajustement.

11. Chaîne cinématique hybride pour un véhicule automobile selon la revendication 10, **caractérisée en ce que** la rondelle d'ajustement est disposée entre le moyeu d'embrayage de l'embrayage séparateur (4) et l'arbre d'entrée de transmission (3).

12. Chaîne cinématique hybride pour un véhicule automobile selon l'une quelconque des revendications 6 à 9, **caractérisée en ce que** le ressort axial (17) est réalisé sous forme de paquet de ressorts allongé.
